# EUROPÄISCHE PATENTSCHRIFT

(11) **EP 1 915 425 B1**
(45) Veröffentlichungstag und Bekanntmachung des Hinweises auf die Patenterteilung: **11.02.2009**
(21) Anmeldenummer: 06776584.2
(22) Anmeldetag: 03.08.2006
(51) Int. Cl.: C08L 1/26, C08J 3/12

(54) **VERFAHREN ZUR HERSTELLUNG VON CELLULOSEETHERPRODUKTEN MIT ERHÖHTER VISKOSITÄT UND FEINHEIT**
METHOD FOR PRODUCING CELLULOSE ETHER PRODUCTS WITH INCREASED VISCOSITY AND FINENESS
PROCEDE DE FABRICATION DE PRODUITS D'ETHER DE CELLULOSE PRESENTANT UNE VISCOSITE ET UNE FINESSE AMELIOREES

(30) Priorität: 16.08.2005 DE 102005038584
(43) Veröffentlichungstag der Anmeldung: 30.04.2008
(73) Patentinhaber: Dow Wolff Cellulosics GmbH, 29699 Bomlitz (DE)
(72) Erfinder: SCHLESIGER, Hartwig, 29664 Walsrode (DE); BAYER, Roland, 29664 Walsrode (DE); AURIEL, Daniel, 29683 Bad Fallingbostel (DE); ENGELHARDT, Jürgen, 29683 Bad Fallingbostel (DE); HÖHL, Frank, 29643 Neuenkirchen (DE); KLOHR, Eric-Andreas, 29664 Walsrode (DE); KULL, Arne, Henning, 29699 Bomlitz (DE); PANNEK, Jörn-Bernd, 29683 Bad Fallingbostel (DE); SCHMIDT, Marc, Oliver, 61462 Königsstein (DE)
(74) Vertreter: Polypatent
(86) Internationale Anmeldenummer: PCT/EP2006/007679
(87) Internationale Veröffentlichungsnummer: WO 2007/019963

(56) Entgegenhaltungen:
- EP-A- 1 529 805
- EP-A1- 0 384 046
- DE-A1- 3 929 400
- DE-A1- 4 206 850
- DE-A1- 10 041 311

## Beschreibung

Die vorliegende Erfindung betrifft ein Verfahren zur Herstellung von Celluloseetherprodukten dadurch gekennzeichnet, dass Super-Absorbierende Polymere (SAP) gemeinsam mit feuchtem Celluloseether getrocknet und gemahlen oder mahlgetrocknet werden sowie die aus diesem Verfahren resultierenden Celluloseetherprodukte.

Celluloseether finden aufgrund ihrer hervorragenden Eigenschaften vielseitig Anwendung, beispielsweise als Verdicker, Kleber, Binde- und Dispergiermittel, Wasserrückhältemittel, Schutzkolloide, Stabilisatoren, sowie als Suspendier-, Emulgier- und Filmbildemittel.

Es ist allgemein bekannt, dass Celluloseether durch alkalischen Aufschluss von Cellulose und anschließende Veretherung mit Veretherungsreagenzien wie Methylchlorid, Ethylenoxid und Propylenoxid hergestellt werden. Ein in technischen Anwendungen einsetzbares Produkt entsteht jedoch erst nach Wäsche, Verdichtung, Mahlung und Trocknung der nach der Reaktion erhaltenen rohen Cellulosederivate.

Für die anwendungstechnischen Einsatzmöglichkeiten der Celluloseether spielt die Viskosität in wässriger Lösung eine ausschlaggebende Rolle. Diese wird maßgeblich durch die Kettenlänge des Cellulosemoleküls vorgegeben und ist dementsprechend vom eingesetzten Rohstoff abhängig.

Nach wie vor besteht hier Bedarf an Herstellverfahren, die bei einem gegebenen Rohstoff zu einer Erhöhung der Viskosität des Produktes führen.

So ist beispielsweise aus EP 0 384 046 bekannt, dass die Auswahl des Mühlentyps einen Einfluss auf die Viskosität des erhaltenen Celluloseethers haben kann.

Seit langem ist weiterhin bekannt, dass die Kombination von Celluloseethern mit anderen Additiven oder Zuschlagstoffen die Möglichkeit eröffnet, spezifische Eigenschaften in anwendungstechnischen Formulierungen einzustellen.

In der US 4487864 wird eine Zusammensetzung von SAP auf Polyacrylamidbasis und einem Celluloseether veröffentlicht. Dabei wird ein höheres Wasserrückhaltevermögen in verschiedenen Bauanwendungen wie Fliesenkleber oder Putze als mit dem Celluloseether allein erreicht. Als Zusammensetzungen werden Abmischungen von Pulvern der einzelnen Komponenten eingesetzt. Diese enthalten von 0,05 bis 50 % des SAP.

Eine ähnliche Pulverabmischung von Celluloseethern und SAP sowie deren Einsatz in Tapetenkleistern wird in der DE 39 29 400 beschrieben.

Die EP 0327351 beansprucht eine Zusammensetzung, bei der die SAP auf Polyacrylsäure basieren. Das Verhältnis von Celluloseether zu SAP beträgt von 3 zu 1 bis 1 zu 3 Gew.Teilen. Das bevorzugte Verhältnis beträgt 1 zu 1. Als Zusammensetzungen werden Abmischungen von Pulvern der einzelnen Komponenten eingesetzt.

Die Veröffentlichung "Highly effective thickening systems with cellulose ether combinations" Cellulosics: Chem., Biochem Mater. Aspects (1993), 325-330 beschreibt die synergistischen Effekte bezüglich der Viskosität in Wasser bei gleichzeitigem Einsatz von MHEC und SAP in einem Verhältnis von 1 zu 1 Gew.Teilen.

Die oben beschriebenen Verfahren vermögen jedoch nicht, Produkte mit einer für manche Anwendungen erforderlichen Viskosität zu liefern. Darüber hinaus ist die Feinheit der nach den oben beschriebenen Verfahren hergestellten Produkte verbesserungswürdig.

Überraschenderweise konnte nun gefunden werden, dass ein Verfahren beinhaltend die Schritte
(a) Mischen eines wasserfeuchten Celluloseethers mit einem Feuchtigkeitsgehalt im Bereich von 25 bis 75 Gew.-% mit 0,1 bis 4 Gew.-% bezogen auf den trockenen Celluloseether eines pulverförmigen SAP zur Erzeugung eines Mahlgutes und
(b) Trocknung und Mahlung oder Mahltrocknung des Mahlgutes
ein Celluloseetherprodukt ergibt, welches sich durch folgende Eigenschaften auszeichnet:
- Höhere Viskosität in Wasser im Vergleich zum Stand der Technik (Pulvercompound) und / oder
- Höhere Feinheit im Vergleich zum Stand der Technik (Pulvercompound).

Die Erfindung betrifft daher weiterhin Celluloseetherprodukte, enthaltend
a) Celluloseether,
b) 0,1 bis 4 Gew.-% bezogen auf den trockenen Celluloseether eines SAP sowie
c) gegebenenfalls weitere Additive,
dadurch gekennzeichnet, dass das Additiv b) als Pulver zu einem wasserfeuchten Celluloseether mit einem Feuchtigkeitsgehalt im Bereich von 25 bis 75 Gew.-%, bezogen auf das Gewicht des feuchten Celluloseethers, unter Mischen und gegebenenfalls weiterer Zugabe von Wasser zudosiert wurde.

Gemäß dem erfindungsgemäßen Verfahren werden wasserfeuchte Celluloseether, wie sie beispielsweise nach der Wäsche roher Celluloseether vorliegen, mit SAP gemischt und gegebenenfalls unter weiterer Zugabe von Wasser unter Mischen auf eine für die folgenden Prozessschritt ideale Feuchte gebracht. Das SAP wird hierbei in Pulverform zugegeben. Die so additivierten feuchten Celluloseether werden anschließend nach bekannten Verfahren getrocknet und gemahlen, wobei die Mahlung und Trocknung auch in einem Schritt stattfinden kann (sogenannte Mahltrocknung).

Als Celluloseether kommen hierbei bevorzugt Methylcellulose und deren Derivate zum Einsatz.

Unter Methylcellulose werden im Rahmen dieser Erfindung alle methylgruppenhaltigen Celluloseether wie Methylcellulose (MC), Methylhydroxyethylcellulose (MHEC), Methylhydroxypropylcellulose (MHPC), Methylhydroxyethylhydroxypropylcellulose, Methyl-ethylhydroxyethylcellulose und Methylhydroxyethylhydroxybutylcellulose verstanden.

Der Grad der Alkylsubstitution eines Celluloseethers wird in der Regel durch den DS (degree of substitution, Substitutionsgrad) beschrieben. Der DS ist die mittlere Anzahl an substituierten OH-Gruppen pro Anhydroglucoseeinheit (AGU). Die Methylsubstitution wird beispielsweise als DS (Methyl) oder DS (M) angegeben.

Üblicherweise wird der Grad der Hydroxyalkylsubstitution durch den MS (molar substitution, molare Substitution) beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen erfolgt anhand der Zeisel-Methode (Literatur: G. Bartelmus und R. Ketterer, Z. Anal. Chem. 286 (1977) 161-190).

Besonders bevorzugt werden Methylcellulose oder Methylhydroxyalkylcellulose eingesetzt. Am meisten bevorzugt als Methylhydroxyalkylcellulose sind Methylhydroxyethylcellulose oder Methylhydroxypropylcellulose.

Im Falle der Methylhydroxyalkylcellulosen beträgt der DS (Methyl) 0,9 bis 3 und der MS (Hydroxyalkyl) 0,05 bis 1. Bevorzugt beträgt der DS (Methyl) 1,1 bis 1,8 und der MS (Hydroxyalkyl) 0,10 bis 0,7. Am meisten bevorzugt beträgt der DS (Methyl) 1,3 bis 1,6 und der MS (Hydroxyalkyl) 0,25 bis 0,50. Insbesondere werden Methylhydroxyethylcellulosen eingesetzt.

Im Anschluss an die Wäsche und Filtration weisen die wasserfeuchten Filterkuchen, die typischerweise bei der Herstellung der Celluloseether erhalten werden, eine Feuchte von 25 bis 75 Gew.-%, bezogen auf das Gewicht des feuchten Celluloseethers, auf. Bevorzugt werden solche wasserfeuchten Filterkuchen eingesetzt, die eine Feuchte von 45 bis 65 Gew.-% besitzen.

Diese werden mit dem trockenen SAP-Pulver gemischt, wobei gegebenenfalls zuvor, während oder danach weiteres Wasser unter Mischen zur Einstellung der Granulatfeuchte der Abmischung zudosiert werden kann. Bevorzugt wird das weitere Wasser nach dem Einmischen des SAP zugegeben.

Die Feuchte der so erzeugten Abmischung (Granulatfeuchte) beträgt üblicherweise 45 bis 80 Gew.-% bezogen auf das Gesamtgewicht der Abmischung, bevorzugt 60 bis 75 Gew.-% und besonders bevorzugt 65 bis 75 Gew.-%.

Unter Super-Absorbierenden Polymeren (SAP) werden im Rahmen dieser Erfindung vernetzte, organische Polymere verstanden, die in Wasser zwar quellbar, aber nicht löslich sind. Sie quellen mit Wasser auf ein Vielfaches ihres Eigengewichtes an, in einigen Fällen ein Mehrhundertfaches. SAP enthalten Gitterstrukturen, die bei der Radikal-Copolymerisation polymerisierbarer Monomere mit kleinen Mengen Vernetzungsmittel entstehen.

Geeignete SAP umfassen chemisch gesehen teilneutralisierte und vernetzte Polyacrylsäuren, (Teil)-Hydrolysate von Stärke-Acrylnitril-Pfropfcopolymeren, (teil-)neutralisierte Stärke-Acrylsäure Pfropfcopolymere, (teil-)verseifte Vinylacetat-Acrylsäureester-Copolymere, (teil-)hydrolysierte Acrylnitril- oder Acrylamidcopolymere, vernetzte Produkte solcher Hydrolysate und Polymere aus vernetzten kationischen Monomeren. Im einzelnen können in den vernetzten superabsorbierenden Polymeren folgende Monomere allein oder in Kombination enthalten sein:
Acrylsäure, Methacrylsäure, Vinylsulfonsäure, Styrolsulfonsäure, 2-(Meth)acrylamid-2-methylpropansulfonsäure, 2-(Meth)acryloylethansulfonsäure, 2-(Meth)acryloylpropansulfonsäure sowie die Salze der zuvor genannten Säuren. Ferner (Meth)-acrylamid, N-ethyl-(meth)acrylate, N,N-dimethylaminopropyl-(meth)acrylate, N,N-dimethylaminopropyl(meth)acrylamide sowie deren quaternäre Salze und Vinylpyrrolidon. Als Vernetzer eignen sich beispielsweise Allylmethacrylat, Diethylenglykoldiacrylat, ethoxyliertes Trimethylolpropantriacrylat, Ethylenglykoldiglycidylether, Methylenbisacrylamid, Tetraallyloxyethan, Triallylamin und Trimethylolpropantriacrylat. Weitere Angaben über Superabsorber sind dem Buch "Modern Superabsorbent Polymer Technology", herausgegeben von Fredric L. Buchholz und Andrew T. Graham, Verlag Wiley -VCH (1998) zu entnehmen.

Bevorzugt sind solche SAP auf Basis von Polyacrylat, Polymethacrylat sowie entsprechenden Copolymerisaten.

Die Partikelgrößenverteilung der SAP-Pulver kann beispielsweise mittel Laserbeugungsverfahren (z.B. Geräte HELOS mit Pulverdispergierung RODOS der Firma Sympatec) bestimmt werden. Die Auswertung des Beugungsbildes eines im Strahlengang eines Lasers befindlichen Partikelsystems erfolgt nach der Fraunhofer-Theorie.

Die Partikelgrößenverteilung wird oftmals durch die X10, X50 und X90 Werte charakterisiert. Diese beschreiben jeweils die Partikelgröße entsprechend 10 % bzw. 50 % bzw. 90 % der Verteilungssumme.

Bevorzugt werden erfindungsgemäß SAP-Pulver mit einem X50 Wert kleiner 250 µm und einem X90 Wert kleiner 400 µm eingesetzt. Bevorzugt liegt der X50 Wert kleiner 150 µm und der X90 Wert kleiner 300 µm, besonders bevorzugt liegt der X50 Wert kleiner 100 µm und der X90 Wert kleiner 200 µm.

Die Einsatzmenge an SAP beträgt 0,1 bis 4 Gew.-% bezogen auf den trockenen Celluloseether. Bevorzugt werden 0,5 bis 2 Gew.-% eingesetzt. Besonders bevorzugt werden 0,6 bis 1,2 Gew.-% eingesetzt. Das SAP wird hierbei bevorzugt in Pulverform unter Mischen zu dem wasserfeuchten Celluloseether zugegeben.

Durch das erfindungsgemäße Verfahren unter Zugabe von SAP wird die Viskosität der resultierenden Produkte, typischerweise gemessen als etwa 1,5 %ige Lösung in Wasser, im Vergleich zu nicht-erfindungsgemäßen Pulverabmischungen erhöht. Bevorzugt wird die Viskosität um mehr als 3 %, besonders bevorzugt um mehr als 6 %, insbesondere sogar um mehr als 12 % erhöht.

Die Produkte nach dem erfindungsgemäße Verfahren weisen üblicherweise Viskositäten V2 von mehr als 40.000 mPas, bevorzugt größer 70.000 mPas, am meisten bevorzugt größer 85.000 mPas auf.

Unter der Viskosität V2 wird die Viskositäten 2 %iger wässriger Lösungen (Gew.-%) bei einem Schergefälle von 2,55 s⁻¹ und 20°C gemessen mittels eines Rotationsviskosimeters (z.B. Haake VT 550) verstanden.

Zusätzlich kann eine Erhöhung der Feinheit der erfindungsgemäßen Celluloseetherprodukte bei der bevorzugten Einsatzmenge von 0,5 bis 2,0 Gew.-% SAP beobachtet werden. Unter der Feinheit der Celluloseetherprodukte wird im Rahmen dieser Erfindung der Siebdurchgang durch ein 0,063 mm Sieb verstanden. Üblicherweise wird die Feinheit der Celluloseetherprodukte um mehr als 15 %, bevorzugt um mehr als 25 % relativ zum Vergleich ohne Einsatz von SAP erhöht. Die Erhöhung der Feinheit wird insbesondere bei den SAP mit feiner Partikelgröße gefunden.

Gegebenenfalls können weitere Additive wie beispielsweise Glyoxal und/oder Puffergemische, beispielsweise in Form wässriger Lösungen, zu dem wasserfeuchten Celluloseether gegeben werden. Hierdurch werden dann lösungsverzögerte Produkte erhalten. Die Herstellung lösungsvercögerter Cellulosederivate ist dem Fachmann seit langem bekannt.

Das SAP-enthaltende Mahlgut wird getrocknet und gemahlen, wobei die Mahlung und Trocknung auch in einem Schritt stattfinden kann (Mahltrocknung). Die Trocknung und Mahlung oder Mahltrocknung wird hierbei nach Methoden gemäß dem Stand der Technik durchgeführt. Bevorzugt wird die Mahlung und Trocknung kombiniert in einem Schritt durchgeführt. Gegebenenfalls können sich weitere Mahlungsschritte gemäß dem Stand der Technik anschließen, um eine weitere Zerkleinerung der Produkte zu erreichen.

Alternativ können die Verfahrensbedingungen bei der Mahlung und Trocknung oder Mahltrocknung so variiert werden, dass die Feinheit der Produkte unverändert bleibt, der energetische Aufwand zur Zerkleinerung der Produkte jedoch abgesenkt ist.

Ein weiterer Gegenstand der Erfindung ist die Verwendung der erfindungsgemäßen Celluloseetherprodukte in Baustoffsystemen.

Die erfindungsgemäßen Celluloseetherprodukte finden bevorzugt Einsatz als Additive in Fliesenklebern, Putzen wie Zement- oder Gipsputz, Spachtelmassen, in zementären Systemen, die extrudiert werden, und anderen Baustoffen.

Um die Celluloseetherprodukte für einen Einsatz in spezifischen Baustoffsystemen anzupassen kann gegebenenfalls eine weitere Additivierung mit pulverförmigen Additiven durchgeführt werden, wie sie beispielsweise in der US-A 4 654 085 beschrieben ist.

### Beispiele

Die in den Beispielen 1 bis 11 eingesetzte Mahltrocknungsanlage und der Mahltrocknungsvorgang lassen sich wie folgt beschreiben:

Die Mahlanlage besteht aus einer sieblosen Hochdrehzahl-Gastrom-Rotationsmühle mit sieben Mahlbahnen. Der Mühle nachgeschaltet ist ein Zyklonabscheider und ein Schlauchfilter. Reingasseitig ist ein Ventilator angeordnet, der den staubfreien Gasstrom in einen Wärmetauscher leitet, wo das Transportgas auf die geforderte Trocknungstemperatur überhitzt wird.

Mittels einer Dosierschnecke wird das Granulat in die Mühle auf Höhe der ersten und zweiten Mahlbahn dosiert. Durch eine der Dosierschnecke vorgeschaltete Lochplatte wird das Aufgabegut in einzelne Stränge von ca. 10 mm Durchmesser zerteilt.

Das eintretende Transportgas hat eine Temperatur von 150 bis 190°C bei Normaldruck. Nach der Mühle beträgt die Temperatur des Transportgases 120 bis 130°C. Die umgewälzte Gasmenge beträgt 1500 bis 1700 Betriebskubikmeter pro Stunde (hinter der Mühle). Überschüssiges Transportgas wird ausgeschleust.

Der Granulatdurchsatz wurde so eingestellt, dass ein Durchsatz von ca. 20 kg/h trockenem Produkt erreicht wurde.

Soweit nicht anders angegeben, wurden die angegebenen Viskositäten der Methylhydroxyethylcellulosen und Methylhydroxypropylcellulosen an Lösungen der trockenen Celluloseether in Wasser bei 20°C und einem Schergefälle von 2,55 s⁻¹ gemessen (Meßgerät: Haake Rotovisko VT 550)

### Beispiele 1 bis 8

In einem 300 1 Pflugscharmischer der Firma Lödige werden jeweils 33 kg einer feuchten Methylhydroxyethylcellulose (Trockengehalt 62 Gew.-%, DS (M) 1,42 und MS (HE) 0,31) bei 30-20°C intensiv 1 Gew.% SAP-Pulver (siehe Tabelle 1) bezogen auf trockene MHEC gemischt und mit Wasser besprüht, so dass sich eine Feuchte (bezogen auf Gesamtmasse) von 72 bis 73 Gew.% im resultierenden Granulat einstellt (Granulatfeuchte). Das Granulat wird anschließend in der oben beschriebenen Mahltrocknungsapparatur zerkleinert und gleichzeitig getrocknet. Jeder Versuch wurde zweimal durchgerührt und die erhaltenen Produkte analysiert.; in der Tabelle 1 sind jeweils die Mittelwerte angegeben (Beispiele 2, 4, 6 und 8).

Zum Vergleich wurde ein Versuch ohne Zusatz von SAP durchgeführt. Das so erhaltene MHEC-Pulver wurde nach der Mahltrocknung mit der entsprechenden Menge SAP-Pulver zu einem Pulvercompound abgemischt (Vergleichsbeispiele 1, 3, 5 und 7).

**Tabelle 1**

| **Beispiel** | **SAP** | **X50** | **X90** | **Viskosität** | **Verände** | **Vergleich /** |
|---|---|---|---|---|---|---|
| | | | | **1,5 gew.%ig** | **rung Viskosität** | **Erfindung** |
| 1 | Defosorb CL 200 AD | 93 | 169 | 34.760 | | V |
| 2 | Defosorb CL 200 AD | 93 | 169 | 39.980 | + 15,0 % | E |
| | | | | | relativ zu Beisp. 1 | |
| 3 | Defosorb CL 350 | 178 | 290 | 34.330 | | V |
| 4. | Defosorb CL 350 | 178 | 290 | 39.435 | + 14,9 % | E |
| | | | | | relativ zu Beisp. 3 | |
| 5 | Luquasorb 1010 | 40 | 93 | 37.450 | | V |
| 6 | Luquasorb 1010 | 40 | 93 | 39.030 | + 4,2 % | E |
| | | | | | relativ zu Beisp. 5 | |
| 7 | Luquasorb 1030 | 216 | 365 | 33.840 | | V |
| 8 | Luquasorb 1030 | 216 | 365 | 38.135 | + 12,7 % | E |
| | | | | | relativ zu Beisp. 7 | |

Defosorb® ist ein Handelsname der Firma Defotec. Luquasorb® ist ein Handelsname der Firma BASF. Die Defosorb®- bzw. Luquasorb®-Produkte sind SAP auf Basis von Polyacrylat und Polymethacrylat.

Bei ansonsten vergleichbaren Bedingungen liefert das erfindungsgemäße Verfahren Produkte mit deutlich höherer Viskosität.

### Beispiele 9 bis 11

In einem 300 1 Pflugscharmischer der Firma Lödige werden jeweils 33 kg einer feuchten Methylhydroxyethylcellulose (Trockengehalt 62 Gew.-%, DS (M) 1,33 und MS (HE) 0,33) bei 30-20°C und SAP-Pulver (siehe Tabelle 2) bezogen auf trockene MHEC intensiv gemischt und mit Wasser besprüht, so dass sich eine Feuchte (bezogen auf Gesamtmasse) von 72 bis 73 Gew.% im resultierenden Granulat einstellt (Granulatfeuchte). Das Granulat wird anschließend in der oben beschriebenen Mahltrocknungsapparatur, die allerdings statt sieben nur fünf Mahlbahnen aufweist, zerkleinert und gleichzeitig getrocknet. Durch den Einsatz von nur fünf Mahlbahnen wird der mechanische Energieeintrag verringert. Gleichzeitig wird die umgewälzte Gasmenge auf 950 bis 1050 Betriebskubikmeter pro Stunde (hinter der Mühle) eingestellt. Das eintretende Transportgas hat eine Temperatur von 200 bis 230°C bei Normaldruck. Nach der Mühle beträgt die Temperatur des Transportgases 120 bis 130°C.

**Tabelle 2**

| **Beispiel** | **SAP** | **Einsatzmenge, Gew.%** | **Viskosität 1,0 gew.%ig** | **Siebdurchgang < 0,125 mm Gew.-%** | **Siebdurchgang < 0,063 mm Gew.-%** | **Vergleich/Erfindung** |
|---|---|---|---|---|---|---|
| 9 | --- | 0 | 11.450 | 68,4 | 33,3 | V |
| 10 | Defosorb | 1,0 | 12.540 | 73,7 | 43,8 | E |
| | CL 200 | | | | | |
| | AD | | | | | |
| 11 | Defosorb | 2,0 | 11.690 | 74,1 | 40,8 | E |
| | CL 200 | | | | | |
| | AD | | | | | |

Das erfindungsgemäße Verfahren liefert Produkte mit deutlich höherer Viskosität (Beispiel 10) und Feinheit relativ zu den Vergleichsversuchen.

### Beispiele 12 bis 13

In einem Granulierer wurde MHPC mit einem DS(M) von 1,60 und einem MS(HP) von 0,16 als Filterkuchen, enthaltend ca. 55 Gew.% Wasser bezogen auf die Gesamtmasse, mit 0,0 bzw 0,8 Gew.% Defosorb CL 200 AD bezogen auf trockene Masse versetzt und anschließend mit Wasser auf ca. 62 Gew.% Feuchte bezogen auf die Gesamtmasse eingestellt. Die so erhaltenen Granulate wurden in einem Stromtrockner auf eine Feuchte von ca. 35 Gew.% getrocknet und anschließend in einer Siebkorbmühle vom Typ Contra Selector (Firma Pallmann) mahlgetrocknet.

Das Celluloseetherprodukt enthaltend SAP weist hierbei eine erhöhte Viskosität und Feinheit auf. Jede Einstellung wurde zweimal gefahren; in der Tabelle 3 sind die Mittelwerte angegeben.

**Tabelle 3**

| **Beispiel** | **SAP** | **Einsatzmenge, Gew.%** | **Viskosität 2,0 gew.%ig** | **Siebdurchgang < 0,063 mm Gew.-%** | **Vergleich/Erfindung** |
|---|---|---|---|---|---|
| 12 | --- | 0 | 57.300 | 44,5 | V |
| 13 | Defosorb | 0,8 | 68.400 | 50,1 | E |
| | CL 200 | | | | |
| | AD | | | | |

## Patentansprüche

1. Verfahren zur Herstellung von Celluloseetherprodukten mit erhöhter Viskosität und Feinheit enthaltend die Schritte
(a) Mischen eines wasserfeuchten Celluloseethers mit einem Feuchtigkeitsgehalt im Bereich von 25 bis 75 Gew.-% mit 0,1 bis 4 Gew.-% bezogen auf den trockenen Celluloseether eines pulverförmigen Super-Absorbierenden Polymeren (SAP) zur Erzeugung eines Mahlgutes und
(b) Trocknung und Mahlung oder Mahltrocknung des Mahlgutes.

2. Verfahren gemäß Anspruch 1, **dadurch gekennzeichnet, dass** der wasserfeuchte Celluloseethers einen Feuchtigkeitsgehalt von 45 bis 65 Gew.-% besitzt.

3. Verfahren gemäß Anspruch 1 oder 2, **dadurch gekennzeichnet, dass** 0,5 bis 2 Gew.-% bezogen auf den trockenen Celluloseether eines pulverförmigen SAP im Schritt (a) eingesetzt werden.

4. Verfahren gemäß einem der vorstehenden Ansprüche, **dadurch gekennzeichnet, dass** im Schritt (a) weitere Additive zugesetzt werden.

5. Verfahren gemäß einem der vorstehenden Ansprüche, **dadurch gekennzeichnet, dass** das Mahlgut eine Feuchte von 45 bis 80 Gew.-% bezogen auf das Gesamtgewicht des Mahlguts aufweist.

6. Verfahren gemäß einem der vorstehenden Ansprüche, **dadurch gekennzeichnet, dass** der Celluloseether ausgewählt ist aus Methylcellulose oder Methylhydroxyalkylcellulose.

7. Verfahren gemäß einem der vorstehenden Ansprüche, **dadurch gekennzeichnet, dass** das SAP ausgewählt ist aus teilneutralisierten und vernetzten Polyacrylsäuren, (Teil)-Hydrolysaten von Stärke-Acrylnitril-Pfropfcopolymeren, (teil-)neutralisierten Stärke-Acrylsäure-Pfropfcopolymeren, (teil-)verseiften Vinylacetat-Acrylsäureester-Copolymeren, (teil-)hydrolysierten Acrylnitril- oder Acrylamidcopolymeren, vernetzten Produkten solcher Hydrolysate und Polymeren aus vernetzten kationischen Monomeren.

8. Celluloseetherprodukt erhältlich nach dem Verfahren gemäß einem der Ansprüche 1 bis 7.

9. Celluloseetherprodukt nach Anspruch 8, **dadurch gekennzeichnet, dass** er eine Viskosität in 2%iger wässriger Lösungen (Gew.-%) bei einem Schergefälle von 2,55 s⁻¹ und 20°C von mehr als 40.000 mPas aufweist.

10. Verwendung der Celluloseetherprodukte nach Anspruch 8 oder 9 als Additive in Baustoffsystemen.

## Claims

1. Method for producing cellulose ether products with increased viscosity and fineness, comprising the steps
(a) mixing a water-moist cellulose ether having a moisture content in the range from 25 to 75% by weight with 0.1 to 4% by weight, based on the dry cellulose ether, of a powdery super-absorbent polymer (SAP) in order to produce a product to be milled, and
(b) drying and milling or mill-drying the product to be milled.

2. Method according to Claim 1, **characterized in that** the water-moist cellulose ether has a moisture content of 45 to 65% by weight.

3. Method according to Claim 1 or 2, **characterized in that** 0.5 to 2% by weight, based on the dry cellulose ether, of a powdery SAP is used in step (a).

4. Method according to one of the preceding claims, **characterized in that** further additives are added in step (a).

5. Method according to one of the preceding claims, **characterized in that** the product to be milled has a moisture of 45 to 80% by weight, based on the total weight of the product to be milled.

6. Method according to one of the preceding claims, **characterized in that** the cellulose ether is chosen from methyl cellulose or methylhydroxyalkyl cellulose.

7. Method according to one of the preceding claims, **characterized in that** the SAP is chosen from partly neutralized and cross-linked polyacrylates, (partial) hydrolysates of starch-acrylonitrile graft copolymers, (partly) neutralized starch-acrylate graft copolymers, (partly) saponified vinyl acetate-acrylate copolymers, (partly) hydrolyzed acrylonitrile or acrylamide copolymers, cross-linked products of such hydrolysates and polymers of cross-linked cationic monomers.

8. Cellulose ether product obtainable by the method according to one of Claims 1 to 7.

9. Cellulose ether product according to Claim 8, **characterized in that** it has a viscosity of more than 40 000 mPa.s in 2% aqueous solution (% by weight) at a shear gradient of 2.55 s⁻¹ and 20°C.

10. Use of the cellulose ether products according to Claim 8 or 9 as additives in building construction material systems.

## Revendications

1. Procédé de fabrication de produits à base d'éthers de cellulose, dotés d'une viscosité et d'une finesse accrues, lequel procédé comporte les étapes suivantes :
a) mélanger un éther de cellulose humecté d'eau, contenant de 25 à 75 % en poids d'humidité, avec 0,1 à 4 %, en poids rapporté au poids de l'éther de cellulose sec, d'un polymère super-absorbant (PSA) en poudre, ce qui donne un produit à moudre,
b) et faire sécher et moudre ce produit à moudre, ou le faire sécher par mouture.

2. Procédé conforme à la revendication 1, **caractérisé en ce que** l'éther de cellulose humecté d'eau contient de 45 à 65 % en poids d'humidité.

3. Procédé conforme à la revendication 1 ou 2, **caractérisé en ce que**, dans l'étape (a), on emploie le polymère super-absorbant (PSA) en poudre en une proportion de 0,5 à 2 %, en poids rapporté au poids de l'éther de cellulose sec.

4. Procédé conforme à l'une des revendications précédentes, **caractérisé en ce que**, dans l'étape (a), on ajoute d'autres adjuvants.

5. Procédé conforme à l'une des revendications précédentes, **caractérisé en ce que** le produit à moudre contient de 45 à 80 % d'humidité, en poids rapporté au poids total du produit à moudre.

6. Procédé conforme à l'une des revendications précédentes, **caractérisé en ce que** l'éther de cellulose est choisi parmi les méthyl-cellulose et méthyl-hydroxyalkyl-cellulose.

7. Procédé conforme à l'une des revendications précédentes, **caractérisé en ce que** le polymère super-absorbant (PSA) est choisi parmi les suivants : poly(acide acrylique) réticulés et partiellement neutralisés, copolymères de greffage d'amidon et d'acrylonitrile, hydrolysés ou partiellement hydrolysés, copolymères de greffage d'amidon et d'acide acrylique, neutralisés ou partiellement neutralisés, copolymères d'acétate de vinyle et d'ester d'acide acrylique, saponifiés ou partiellement saponifiés, copolymères d'acrylonitrile ou d'acrylamide, hydrolysés ou partiellement hydrolysés, produits de réticulation de tels produits d'hydrolyse, et polymères à base de monomères cationiques réticulés.

8. Produit à base d'éthers de cellulose, accessible par un procédé conforme à l'une des revendications 1 à 7.

9. Produit à base d'éthers de cellulose, conforme à la revendication 8, **caractérisé en ce qu'**il présente, en solution aqueuse à 2 % en poids, pour une vitesse de cisaillement de 2,55 s⁻¹ et à 20 °C, une viscosité supérieure à 40 000 mPa.s.

10. Utilisation de produits à base d'éthers de cellulose, conformes à la revendication 8 ou 9, comme adjuvants dans des systèmes de matériaux de construction.
